(19) **Europäisches Patentamt / European Patent Office / Office européen des brevets**

(11) **EP 4 283 425 A1**

(12) # EUROPEAN PATENT APPLICATION
published in accordance with Art. 153(4) EPC

(43) Date of publication:
**29.11.2023 Bulletin 2023/48**

(21) Application number: **21921176.0**

(22) Date of filing: **27.10.2021**

(51) International Patent Classification (IPC):
**G05B 23/02** (2006.01)    **G01M 99/00** (2011.01)
**B29C 48/40** (2019.01)

(52) Cooperative Patent Classification (CPC):
**B29C 48/40; B29C 48/505; B29C 48/92;**
**G01M 99/00; G05B 23/02**

(86) International application number:
**PCT/JP2021/039584**

(87) International publication number:
**WO 2022/158073 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021   JP 2021009824**

(71) Applicant: **The Japan Steel Works, Ltd.**
**Tokyo 141-0032 (JP)**

(72) Inventors:
- **OHSHITA, Takeaki**
  **Tokyo 141-0032 (JP)**
- **FUROKAWA, Mikio**
  **Tokyo 141-0032 (JP)**
- **HIRANO, Takayuki**
  **Tokyo 141-0032 (JP)**

(74) Representative: **Cabinet Beaumont**
**4, Place Robert Schuman**
**B.P. 1529**
**38025 Grenoble Cedex 1 (FR)**

(54) **COMPUTER PROGRAM, ABNORMALITY DETECTION METHOD, ABNORMALITY DETECTION DEVICE, MOLDING MACHINE SYSTEM, AND LEARNING MODEL GENERATION METHOD**

(57)     A computer program causing a computer to execute processing of detecting an abnormality of an industrial machine having a movable part is provided. The computer executes the processing of acquiring physical quantity data on a time-series basis output from a sensor detecting a physical quantity related to a motion of the movable part; converting the physical quantity data on a time-series basis acquired to a time-series data image representing the physical quantity data; inputting the time-series data image converted to a learning model to calculate a feature of the time-series data image, the learning model being trained with a feature of the time-series data image related to the movable part in a normal condition; and determining a presence or an absence of an abnormality of the industrial machine based on the calculated feature.

FIG.1

## Description

[Technical Field]

The present invention relates to a computer program, an abnormality detection method, an abnormality detection apparatus, a molding machine system, and a method of generating a learning model that detect an abnormality of an industrial machine with movable parts.

[Background Art]

Patent Document 1 discloses a monitoring method in which by monitoring vibrations of each of the movable parts of an injection molding machine with an acceleration sensor, the status of a molding process and the occurrence of an abnormality of the movable part are detected.

[Prior Art Document]

[Patent Document]

[Patent Document 1] Japanese Patent Application Laid-Open No. H5-50480

[Summary of Invention]

[Problems to be Solved by Invention]

Patent Document 1, however, fails to disclose a specific analytic method of time-series data such as acceleration data and an abnormality detection method. Since the vibration waveform of each movable part is complex, determining an abnormality of the injection molding machine is not always easy.

An object of the present disclosure is to provide a computer program, an abnormality detection method, an abnormality detection apparatus, a molding machine system and a method of generating a learning model that are capable of converting time-series data of physical quantities related to movable parts of an industrial machine to a time-series data image representing the time-series data and determining an abnormality of the industrial machine based on the time-series data image.

[Means for Solving Problems]

A computer program according to the present disclosure is a computer program causing a computer to execute processing of detecting an abnormality of an industrial machine having a movable part, and the computer executes the processing of acquiring physical quantity data on a time-series basis output from a sensor detecting a physical quantity related to a motion of the movable part; converting the physical quantity data on a time-series basis acquired to a time-series data image representing the physical quantity data; inputting the time-series data image converted to a learning model to calculate a feature of the time-series data image, the learning model being trained with a feature of the time-series data image related to the movable part in a normal condition; and determining a presence or an absence of an abnormality of the industrial machine based on the feature calculated.

An abnormality detection method according to the present disclosure is an abnormality detection method for detecting a presence or an absence of an abnormality of an industrial machine having a movable part, and the method causes a computer to execute the processing of acquiring physical quantity data on a time-series basis output from a sensor detecting a physical quantity related to a motion of the movable part; converting the physical quantity data on a time-series basis acquired to time-series data image representing the physical quantity data inputting the time-series data image converted to a learning model to calculate a feature of the time-series data image, the learning model being trained with a feature of the time-series data image related to the movable part in a normal condition; and determining a presence or an absence of an abnormality of the industrial machine based on the feature calculated.

A molding machine system according to the present disclosure comprises the above-mentioned abnormality detection apparatus; and a molding machine, and the abnormality detection apparatus is adapted to detect an abnormality of the molding machine.

An abnormality detection apparatus according to the present disclosure is an abnormality detection apparatus detecting an abnormality of an industrial machine having a movable part, and comprises: a sensor that detects a physical quantity related to a motion of the movable part; an acquisition unit that acquires physical quantity data on a time-series basis output from the sensor; a conversion unit that converts the physical quantity data on a time-series basis acquired by the acquisition unit to a time-series data image representing the physical quantity data; a calculation unit that inputs the time-series data image converted to a learning model to calculate a feature of the time-series data image, the learning model being trained with a feature of the time-series data image related to the movable part in a normal condition; and a determination unit that determines a presence or an absence of an abnormality of the industrial machine based on the feature calculated by the calculation unit.

A method of generating a learning model according to the present disclosure is a method of generating a learning model for detecting an abnormality of a twin-screw kneading extruder having a first screw and a second screw, and the method causes a computer to execute processing of based on time-series data indicating displacements in a first-axis direction and a second-axis direction that intersect a rotation center axis of the first screw of the twin-screw kneading extruder and time-series data indicating displacements in a third-axis direction and a fourth axis direction that intersect a rotation center axis of the second screw of the twin-screw kneading extruder, generating a plurality of time-series data images each including, in a single image, a first image rendering displacements in the first-axis direction and the second-axis direction that intersect the rotation center axis of the first screw and a second image rendering displacements in the third-axis direction and the fourth-axis direction that intersect the rotation center axis of the second screw, and based on training data sets including the plurality of time-series data images generated and a plurality of reference images having any feature, generating a learning model that outputs a feature according to a normal operation and an abnormal operation of the twin-screw kneading extruder in a case where a time-series data image including a first image and a second image rendering displacements of the rotation center axes of the first screw and the second screw is input.

[Effect of Invention]

The present disclosure allows conversion time-series data of physical quantities related to movable parts of the industrial machine to a time-series data image representing the time-series data and determination of an abnormality in the industrial machine based on the time-series data image.

[Brief Description of Drawings]

FIG. 1 is a block diagram illustrating an example of the configuration of a molding machine system according to a present embodiment.
FIG. 2 is a schematic diagram illustrating an example of the configuration of a twin-screw kneading extruder according to the present embodiment.
FIG. 3 is a schematic diagram illustrating the position to which a displacement sensor is attached.
FIG. 4 is a block diagram illustrating an example of the configuration of an abnormality detection apparatus according to the present embodiment.
FIG. 5 is a flowchart showing a processing procedure for abnormality detection according to the present embodiment.
FIG. 6 is a first time-series data image representing the displacements of a first screw.
FIG. 7 is a time-series data image representing the displacements of the first screw and a second screw.
FIG. 8 is a conceptual diagram presenting features of the time-series data image and the detection result of an abnormality.
FIG. 9 is a conceptual diagram of the outline of a method of generating a learning model.
FIG. 10 is a conceptual diagram of a learning model in a learning phase.
FIG. 11 is a conceptual diagram of a learning model in a test phase.

FIG. 12 is a scatter diagram presenting features of the time-series data image.
FIG. 13 is a chart presenting the evaluation results of abnormality detection using a learning model.

[Mode for Carrying Out Invention]

Specific examples of a computer program, an abnormality detection method, an abnormality detection apparatus, a molding machine system and a method of generating a learning model according to an embodiment of the present invention will be described below with reference to the drawings. It should be noted that the invention is not limited to these examples, and is indicated by the scope of claims, and is intended to include all modifications within the meaning and scope equivalent to the scope of claims. Furthermore, at least parts of the following embodiment and modification may arbitrarily be combined.

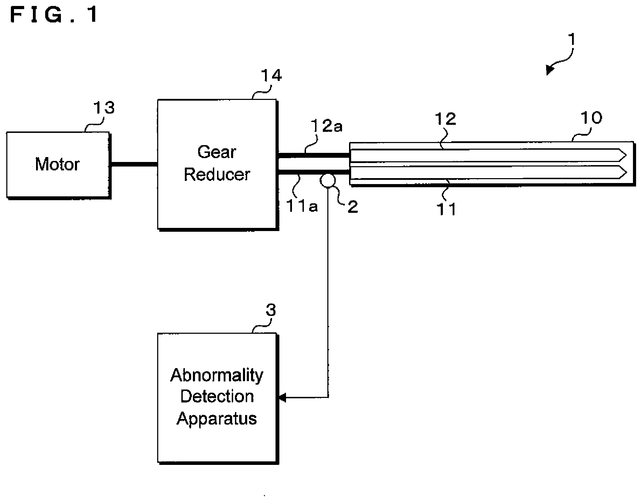

FIG. 1 is a block diagram illustrating an example of the configuration of a molding machine system according to a present embodiment. The molding machine system includes a twin-screw kneading extruder 1, a displacement sensor 2 and an abnormality detection apparatus 3.

<Twin-Screw Kneading Extrude 1>

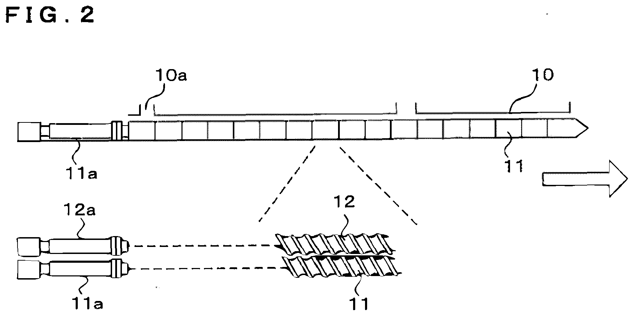

FIG. 2 is a schematic diagram illustrating an example of the configuration of the twin-screw kneading extruder 1 according to the present embodiment. The twin-screw kneading extruder 1 is provided with a cylinder 10 with hopper 10a into which resin raw materials are charged, a first screw 11 and a second screw 12. The first and second screws 11 and 12 are arranged substantially parallel with each other in mesh so as to be rotatably inserted into a hole of the cylinder 10, and carry the resin raw materials loaded into the hopper 10a in the direction of extrusion (to the right in FIG. 2) for melting and kneading the materials.

The first screw 11 is configured to be a bar of screw by combining a plurality of types of screw pieces as one piece. For example, the first screw 11 is configured by arranging and combining a flight screw-shaped forward flight piece that carries resin raw materials in a forward direction, a reverse flight piece that carries resin raw materials in a reverse direction, a kneading piece that kneads resin raw materials and the like depending on an order and at positions according to the characteristics of the resin raw materials. The configuration of the second screw 12 is similar to that of the first screw 11.

Furthermore, the twin-screw kneading extruder 1 is further provided with a motor 13 that outputs driving force to rotate the first screw 11 and the second screw 12 and a gear reducer 14 that reduces the transmission of the driving force output by the motor 13. The driving shafts 11a and 12a of the first screw 11 and the second screw 12 are coupled to output shaft of the gear reducer 14. The first screw 11 and the second screw 12 are rotated by the driving force of the motor 13 that is reduced in transmission speed by the gear reducer 14.

<Displacement Sensor 2>

The displacement sensor 2 is a sensor for detecting displacements of the rotation centers of the first screw 11 and the second screw 12 that are rotating. The displacement sensor 2 may preferably be disposed at an appropriate position between the gear reducer14 and the cylinder 10, specifically, near the driving shafts 11a, 12a of the first screw 11 and the second screw 12.

The first screw 11 and the second screw 12 are examples of the movable parts of the industrial machine. More specifically, the first screw 11 and the second screws 12 are examples of the rotating shafts of the twin-screw kneading extruder 1 as an example of the industrial machine.

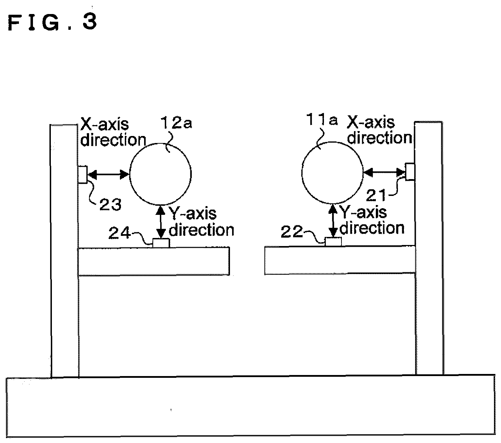

FIG. 3 is a schematic diagram illustrating the position to which the displacement sensor 2 is attached. The displacement sensor 2 includes a first displacement sensor 21 for detecting a displacement in an X-axis direction (first direction) orthogonal to the rotation center axis of the first screw 11 and a second displacement sensor 22 for detecting a displacement in a Y-axis direction (second direction) orthogonal to the rotation center axis of the first screw 12 and the X-axis. The first displacement sensor 21 and the second displacement sensor 22 are arranged so as to face the driving shaft 11a of the first screw 11. The X-axis direction and the Y-axis direction are respectively a horizontal direction and a vertical direction perpendicular to the rotation center axis of the first screw 11, for example.

Furthermore, the displacement sensor 2 includes a third displacement sensor 23 for detecting a displacement in an X-axis direction (third direction) orthogonal to the rotation center axis of the second screw 12 and a fourth displacement sensor 24 for detecting a displacement in a Y-axis direction (fourth direction) orthogonal to the rotation center axis of the second screw 12 and the X-axis. The third displacement sensor 23 and the fourth displacement sensor 24 are arranged so as to face the driving shaft 12a of the second screw 12. The X-axis and Y-axis directions are respectively horizontal and vertical directions perpendicular to the rotation center axis of the second screw 12, for example.

The first to fourth displacement sensors 21, 22, 23 and 24 constantly detect the displacements of the rotating center axes of the first and second screws 11 and 12 that are rotating, and output time-series displacement data (physical quantity data) indicating the detected displacements to the abnormality detection apparatus 3. Hereafter, the first to fourth displacement sensors 21, 22, 23 and 24 are collectively referred to as a displacement sensor 2.

The displacement data output by the first and second displacement sensors 21, 22 corresponds to time-series data indicating a first physical quantity, and this displacement data is a two-dimensional physical quantity indicated by two numerical values. The displacement data output by the third and fourth displacement sensors 23, 24 corresponds to time-series data indicating the second physical quantity, and the displacement data is a two-dimensional physical quantity indicated by two numerical values.

<Abnormality Detection Apparatus 3>

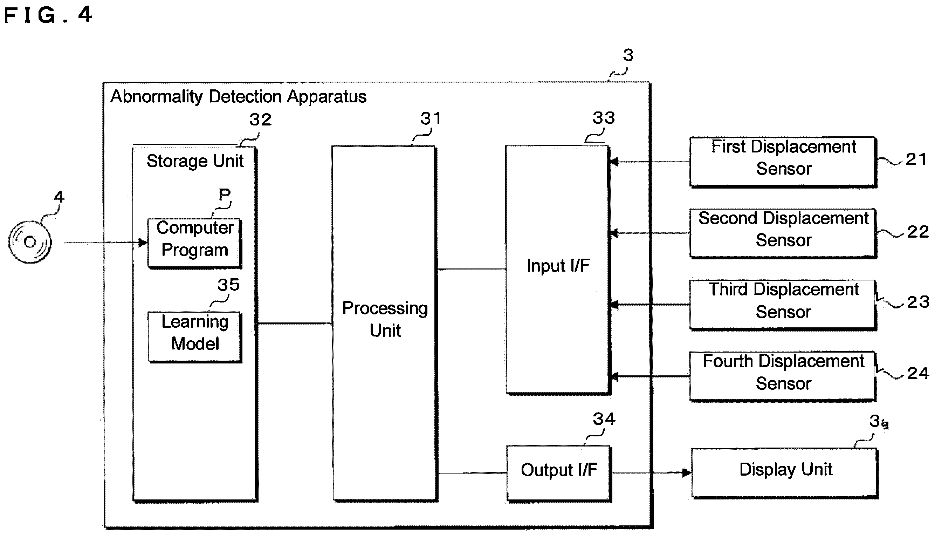

FIG. 4 is a block diagram illustrating an example of the configuration of the abnormality detection apparatus 3 according to the present embodiment. The abnormality detection apparatus 3 is a computer and is provided with a processing unit 31, a storage unit 32, an input interface (input I/F) 33 and an output interface (output I/F) 34. The storage unit 32, the input interface 33 and the output interface 34 are connected to the processing unit 31.

The processing unit 31 includes an arithmetic processing circuit such as a CPU (Central Processing Unit), a multi-core CPU, a GPU (Graphics Processing Unit), a General-purpose computing on graphics processing units (GPGPU), a Tensor Processing Unit (TPU), an Application Specific Integrated Circuit (ASIC) , an Field-Programmable Gate Array (FPGA), and an Neural Processing Unit (NPU), and internal storage devices such as a ROM (Read Only Memory) and a RAM (Random Access Memory), an I/O terminal, etc. The processing unit 31 functions as the abnormality detection apparatus 3 according to the present embodiment by executing a computer program (program product) P stored in the storage unit 32, which will be described later. Note that each functional part of the abnormality detection apparatus 3 may be realized by software, or a part or all of the functional parts thereof may be realized by hardware.

The storage unit 32 is a nonvolatile memory such as a hard disk, an Electrically Erasable Programmable ROM (EEPROM), a flash memory or the like. The storage unit 32 stores a computer program P for causing the computer to execute an abnormality detection method according to the present embodiment and a learning model 35. The learning model 35 is a convolutional neural network model that, if receiving an input of a time-series data image described later representing the time-series data obtained by detecting displacements of the first screw 11 and the second screw 12, extracts the feature of the time-series data image and outputs the extracted feature. The learning model 35 is a CNN (Convolutional Neural Network) model having a feature extraction layer and is, for example, a one-class classification model. The details of the method of generating the learning model 35 and the configuration thereof are described below.

The computer program P and the learning model 35 according to the present embodiment may be recorded on a recording medium 4 so as to be readable by the computer. The storage unit 32 stores the computer program P and the learning model 35 read from the recording medium 4 by a reader (not illustrated). The recording medium 4 is a semiconductor memory such as a flash memory. Furthermore, the recording medium 4 may be an optical disc such as a CD (Compact Disc)-ROM, a DVD (Digital Versatile Disc)-ROM, or a BD (Blu-ray (registered trademark) Disc). Moreover, the recording medium 4 may be a magnetic disk such as a flexible disk or a hard disk, or a magneto-optical disk. In addition, the computer program P and the learning model 35 according to the present embodiment may be downloaded from an external server (not illustrated) connected to a communication network (not illustrated) and stored in the storage unit 32.

The input interface 33 is connected with the first to fourth displacement sensors 21, 22, 23 and 24 and receives inputs of displacement data as time-series data that are output from the first to fourth displacement sensors 21, 22, 23 and 24.

The output interface 34 is connected with a display unit 3a. The display unit 3a displays the presence or absence of an abnormality in the twin-screw kneading extruder 1.

<Abnormality Detection Processing>

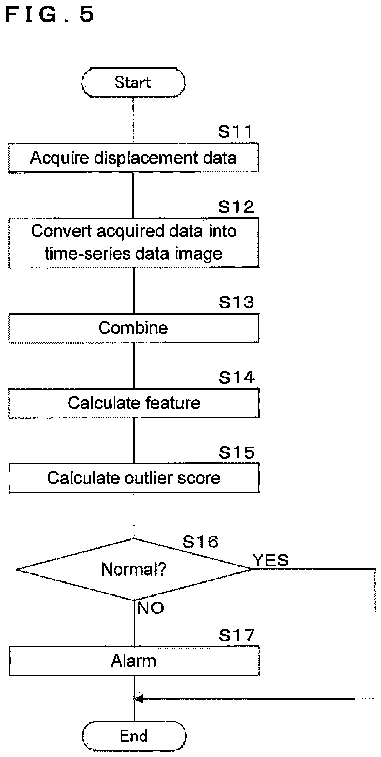

FIG. 5 is a flowchart showing a processing procedure for abnormality detection according to the present embodiment. The processing unit 31 acquires time-series displacement data that is output from the displacement sensor 2 (step S11). The processing unit 31 may preferably acquire displacement data over the time during which the first screw 11 and the second screw 12 rotate several times.

The processing unit 31 then converts the acquired displacement data into a first time-series data image (first image) and a second time-series data image (second image) respectively representing the displacements of the rotation center axes of the first screw 11 and the second screw 12 (step S12).

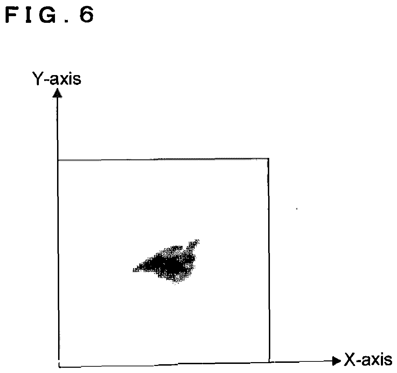

FIG. 6 is the first time-series data image representing the displacements of the first screw 11. The first time-series data image is a substantially square image. The X-axis direction and the Y-axis direction of the image respectively correspond to the X-axis direction (first axis direction) and the Y-axis direction (second axis direction) illustrated in FIG. 4, and the amounts of displacements in the X-axis direction and the Y-axis direction are plotted as coordinate values of the X-axis and the Y-axis. The first time-series data image is obtained by plotting three rotations of displacements.

The second time-series data image representing the displacement of the second screw 12 is also a substantially square image as in the first time-series data image. The X-axis direction and the Y-axis direction of the image respectively correspond to the X-axis direction (third axis direction) and the Y-axis direction (fourth axis direction) as in FIG. 4, and the amounts of displacements in the X-axis direction and Y-axis direction are plotted as coordinate values of the X-axis and the Y-axis.

Next, the processing unit 31 combines the first time-series data image and the second time-series data image to create a sheet of time-series data image (step S13).

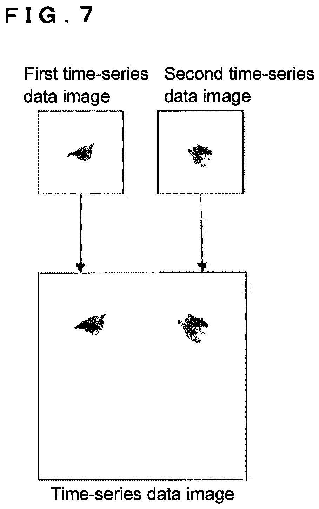

FIG. 7 is a time-series data image illustrating the displacements of the first screw 11 and the second screw 12. The combined time-series data image is a substantially square image that is twice (four times for the area) as large as the first time-series data image. The time-series data image contains the information of the original image as it is without changing the aspect ratio of the first time-series data image and the second time-series data image. Specifically, the time-series data image includes the first time-series data image and the second time-series data image arranged side by side at the upper part of FIG. 7 and a blank image that is arranged at the lower part to make the time-series data image substantially square. The method of arranging the first and second time-series data images and the blank image is not limited to a particular one as long as the first time-series data image and the second time-series data image are included as they are.

Next, the processing unit 31 inputs the time-series data image combined at step S13 to the learning model 35 to thereby calculate the feature of the time-series data image (step S14). The feature is represented by, for example, vector quantity in multiple dimensions such as numeral values of hundreds to thousands.

The processing unit 31 then calculates an outlier score of the feature of the time-series data image calculated at step S14 (step S15). The outlier score is obtained by evaluating the ratio of the outlier of the feature of the time-series data image calculated at step S14 to the feature (hereinafter referred to as the sample feature) of the time-series data image obtained when the normal twin-screw kneading extruder 1 operates and converting the ratio into a number. The outlier score is, for example, Local Outlier Factor (LOF). The LOF can be expressed as the ratio <ld(Q)>/ld(P) which is the ratio of the average of the local densities <ld(Q)> of the features (k pieces of sample features nearest to the feature) in the group neighboring the feature as a target to the local density ld (P), which is the feature as a target for abnormality detection. As the LOF is larger than 1, the outlier degree is greater. It is noted that P indicates the feature as a target for abnormality detection while Q indicates the sample feature described above.

The processing unit 31 then determines whether or not the calculated outlier score is equal to or larger than a predetermined threshold to judge the normality of the twin-screw kneading extruder 1 or the first and second screws 11, 12 (step S16). If the outlier score corresponds to the above-mentioned LOF, the threshold is a value equal to or larger than 1. The processing unit 31 determines to be abnormal if the LOF is equal to or larger than the threshold and determines to be normal if the LOF is smaller than the threshold.

Note that the abnormality determination using the LOF as described above is one example, and it may be possible to determine whether or not the twin-screw kneading extruder 1 is abnormal using the k-Nearest Neighbor algorithm and the SVM. In addition, it may be configured to determine whether or not the twin-screw kneading extruder 1 is abnormal by judging whether or not the feature of the target for an abnormality detection is far from the sample feature in the normal condition using the Hotelling's method.

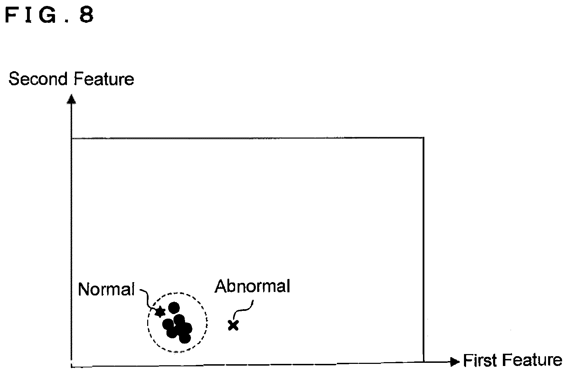

FIG. 8 is a conceptual diagram presenting features of the time-series data image and the detection result of an abnormality. FIG. 8 is obtained by dimensionally-reducing high-dimensional features of the time-series data image to two-dimensional features and plotting them on a two-dimensional plane. The horizontal axis and the vertical axis in FIG. 8 respectively indicate the first feature and the second feature of the dimensionally reduced time-series data image. The dimensional compression of the features can be performed by dimensional reduction algorithms such as t-SNE, for example.

As illustrated in FIG. 8, the learning model 35 is trained so that the local density of the features in the normal condition that is output from the learning model 35 is high.

The dashed line circle represents the image of the threshold. If the statistical distance between the feature of the time-series data image as the target for abnormality detection (for example, a star-shaped hexagonal plot) and a group of features of the time-series data image in the normal condition is short (the local density is relatively high) and the LOF value is small, the twin-screw kneading extruder 1 is presumed to be in the normal condition. If the statistical distance between the feature of the time-series data image as the target for abnormality detection (for example, an X-shaped plot) and the group of features of the time-series data image in the normal condition is long (the local density is relatively low) and the LOF value is large, the twin-screw kneading extruder 1 is presumed to be in the abnormal condition.

If determining that the twin-screw kneading extruder 1 is normal (step S16: YES), the processing unit 31 ends the processing. If determining that the twin-screw kneading extruder 1 is abnormal (step S16: NO), the processing unit 31 outputs an alarm indicating that there is an abnormality in the twin-screw kneading extruder 1 (step S17) and ends the processing. For example, the processing unit 31 displays an alarm screen for reporting that there is an abnormality in the twin-screw kneading extruder 1 on the display unit 3a. In addition, as illustrated in FIG. 8, the processing unit 31 may be configured to display on the display unit 3a an image representing the feature of the current time-series data image as a target for evaluation and the features of the time-series data in the normal condition. Specifically, the processing unit 31 dimensionally-reduces high-dimensional features of the time-series data image to two-dimensional features using arbitrary dimensional reduction algorithm such as t-SNE and plots the features represented in a two-dimensional manner on a two-dimensional graph to thereby generate an image representing features. The processing unit 31 outputs the data of the image to the display unit 3a to cause the display unit 3a to display an image representing the feature of the current time-series data image as a target for evaluation and the features of the time-series data in the normal condition.

<Learning Model Generation Method>

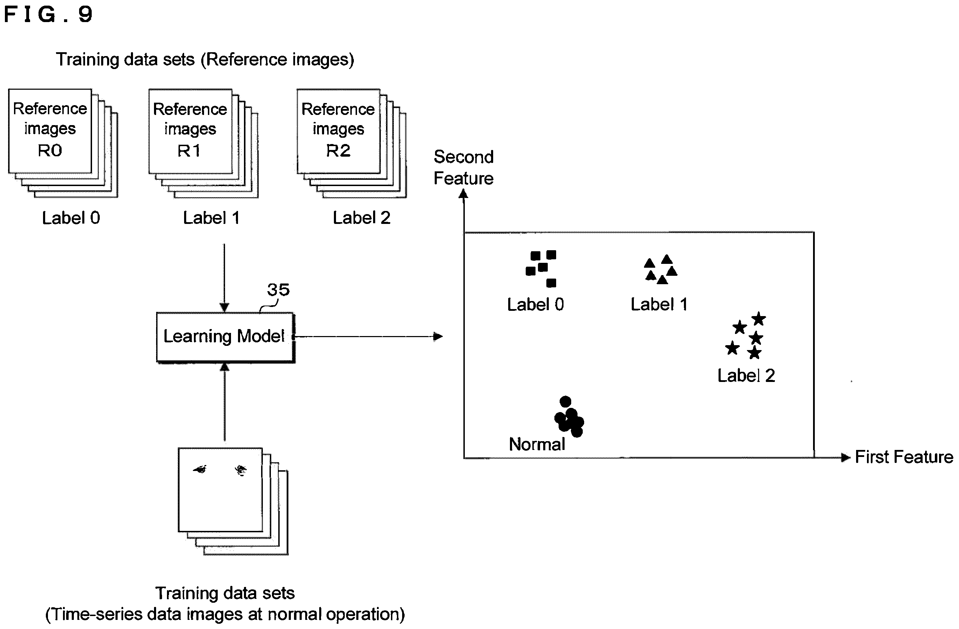

FIG. 9 is a conceptual diagram of the outline of the method of generating the learning model 35. The following describes an example in which the processing unit 31 of the abnormality detection apparatus 3 machine-trains the learning model 35.

First, multiple time-series data images detected and obtained when the twin-screw kneading extruder 1 is operating normally and arbitrary sets of reference images R0, R1 and R2 that are not associated with the time-series data images are prepared as training datasets necessary to generate a one-class classification model. The reference images R0, reference images R1 and reference images R2 are image data of multiple classes selected from training datasets such as Image Net, for example. In the example illustrated in FIG. 9, the reference images R0, reference images R1 and reference images R2 denoted with the label 0, label 1 and label 2 are prepared.

The learning model 35, which has a feature extraction layer consisting of multiple convolutional layers and multiple pooling layers for extracting features of an image, is trained with time-series data images at normal operation and the reference images R0, reference images R1 and reference images R2. Specifically, the processing unit 31 trains the leaning model 35 so as to output features capable of identifying the type of each image, that is, having a high local density of the features of the time-series data image as illustrated at the right of FIG. 9 and having a high distinguishability among the features of the reference images R0, R1 and R2.

The method of generating the one-class classification model is described in detail below.

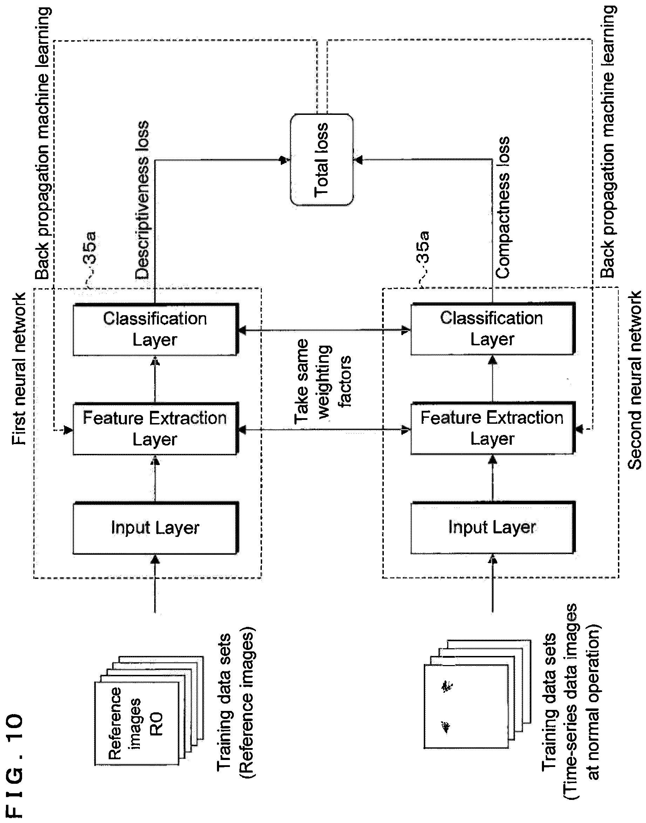

FIG. 10 is a conceptual diagram of the learning model 35 in a learning phase. First, a first neural network (reference network) 35a and a second neural network (secondary network) 35a are prepared.

The first neural network 35a is a CNN model having an input layer, a feature extraction layer and a classification layer. The feature extraction layer has a structure of alternating multiple convolutional layers and multiple pooling layers. The classification layer has one or more fully connected layers, for example. The first neural network 35a is pre-trained using training datasets such as Image Net, for example.

The second neural network 35a has the same network configuration as the first neural network 35a and also has the same various parameters (weighting factors) that characterize the feature extraction layer and the classification layer. In the learning phase of the first neural network 35a and the second neural network 35a, the various parameters in the feature extraction layer and the classification layer take the same values.

The processing unit 31 then inputs the set of reference images R0 to the first neural network 35a and calculates a descriptiveness loss, which is a loss function. On the other hand, the processing unit 31 inputs time-series data images obtained in the normal condition to the second neural network 35a and calculates a compactness loss, which is a loss function. The descriptiveness loss is a loss function commonly used in learning for the classifier such as a cross-entropy error, for example. The compactness loss is expressed by the following equations (1), (2) and (3). The compactness loss is a value corresponding to the dispersion of the output of the second neural network 35a in the batch, i.e., in the training datasets.

[Equation 1]

$$z_i = x_i - m_i \quad \cdots \quad (1)$$

$$m_i = \frac{1}{n-1}\sum_{j \neq i} x_j \quad \cdots \quad (2)$$

$$l_C = \frac{1}{nk}\sum_{i=1}^{n} z_i^T z_i \quad \cdots \quad (3)$$

Where

i : A serial number indicating each of the time-series data images for training
n : Batch size (the number of time-series data images for training)
$x_i$ : Feature
k : Dimension of the feature

The processing unit 31 then calculates a total loss based on the descriptiveness loss and the compactness loss. The total loss is expressed by the following Equation (4), for example.

[Equation 2]

$$L = l_D + \lambda\, l_C \quad \cdots \quad (4)$$

Where

L : Total loss
$l_D$ : Descriptiveness loss
$l_C$ : Compactness loss
$\lambda$ : Constant (e.g., 0.1)

The processing unit 31 trains the first neural network 35a and the second neural network 35a by optimizing the various parameters in the first neural network 35a and the second neural network 35a using the back propagation method or the like so that the total loss expressed by Equation (4) described above is reduced. When the machine learning is performed, the various parameters in the previous stage may be fixed while the parameters in the multiple layers in the later stage may be adjusted.

The features output from the feature extraction layers of the thus trained first neural network 35a and second neural network 35a each have a high local density of the features of the time-series data images obtained when the twin-screw kneading extruder 1 is in the normal condition and have a low local density with the features for other arbitrary images as illustrated in FIG. 9.

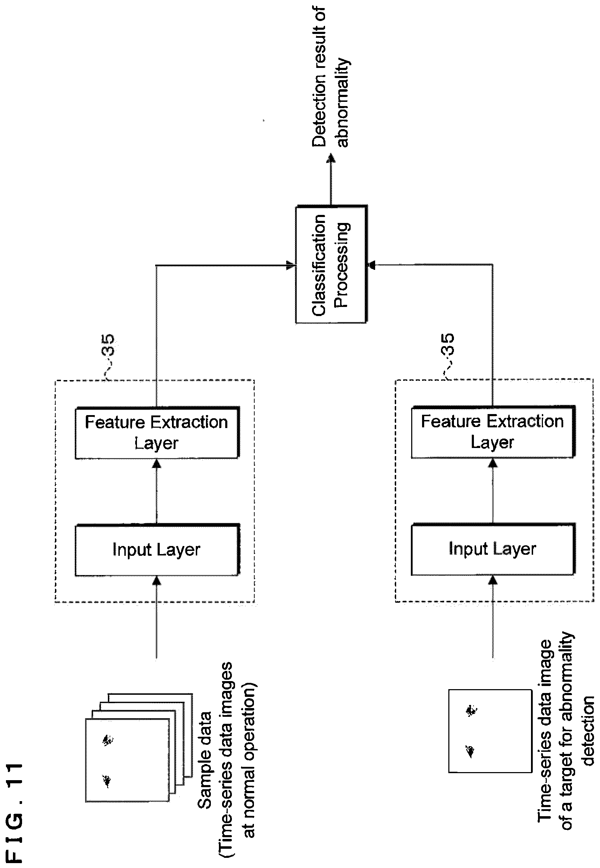

FIG. 11 is a conceptual diagram of the learning model 35 in a test phase. As illustrated in FIG. 11, the learning model 35 according to the present embodiment can be composed of the input layer and the feature extraction layer of the second neural network 35a trained as described above. The classification layer illustrated in FIG. 10 is thus not a necessary component for the learning model 35 according to the present embodiment. The second neural network 35a illustrated in FIG. 10 may, however, be used for the learning model 35 as it is to employ the feature output from the feature extraction layer.

Though FIG. 11 illustrates the two learning models 35, this conceptually presents a state in which the time-series data image as a target for detection and the time-series data image obtained in the normal condition as a sample are input and does not represent the presence of two models.

In the test phase, by inputting the time-series data image obtained in the normal condition as sample data to the learning model 35, the processing unit 31 causes the learning model 35 to output the feature of the time-series data image in the normal condition. On the other hand, by inputting the time-series data image as a target for abnormality detection to the learning model 35, the processing unit 31 causes the learning model 35 to output the feature of the time-series data image. The processing unit 31 calculates an outlier score of the feature as a target for abnormality detection relative to the feature of the sample data, compares the calculated outlier score with the threshold to determine whether or not the time-series data image as a target for abnormality detection is abnormal, that is, whether or not the twin-screw kneading extruder 1 is abnormal.

Though FIG. 11 illustrates an example in which the sample data is input to the learning model 35 to calculate the feature of this sample data, by having stored the features of multiple pieces of sample data that are calculated in advance in the storage unit 32, an outlier score may be calculated using the features of the sample data stored in the storage 32 in the abnormality detection processing.

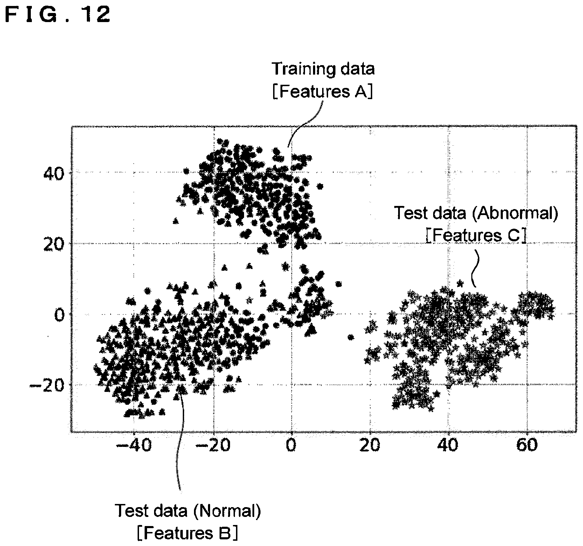

FIG. 12 is a scatter diagram presenting features of the time-series data image. FIG. 12 is a scatter diagram obtained by dimensionally-reducing high-dimensional features of the time-series data image to two-dimensional features and plotting them on a two-dimensional plane as in FIG. 8. In the scatter diagram, features A of the time-series data images as training data obtained when the twin-screw kneading extruder 1 operates in the normal condition, features B of the time-series data images as test data obtained when the twin-screw kneading extruder 1 is in the normal condition and features C of the time-series data images as test data obtained when the twin-screw kneading extruder 1 is in the abnormal condition are plotted. As can be understood from FIG. 12, the features B of test data (normal) are located near the features A of the training data while the features C of the test data (abnormal) are distinguishably spaced from the features A of the training data.

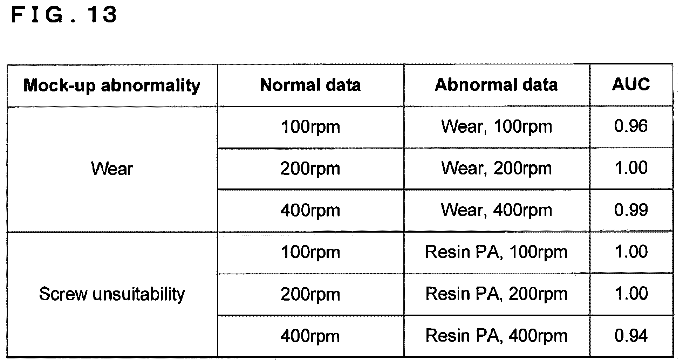

FIG. 13 shows the evaluation results of the abnormality detection using the learning model 35.

The "mock-up abnormality" in the table in FIG. 13 indicates the types of abnormalities. Wear indicates the abnormal condition in which the first and second screws 11 and 12 are worn. In the present experiment, the wear condition is reproduced by simulation using the FF (forward lead full flight) piece at the front of the kneading unit and the first FK (forward shifted kneading disk) having a smaller external diameter in the kneading unit to create time-series data images by detecting the displacements of the first and second screws 11 and 12. Specifically, in the case where the screw having an external diameter of 68.0 mm is normal, the wear condition is reproduced by simulation using the above-mentioned pieces having an external diameter of 63.0 mm. Screw unsuitability indicates an abnormal condition in which the twin-screw kneading extruder 1 is operated using a type of resin material different from the assumed resin raw material. The present experiment shows an abnormal condition occurring when the first and second screws 11 and 12 to be used for polypropylene (PP) employ nylon (PA) as a resin raw material.

"Normal data" represents time-series data images obtained in the state where the first and second screws 11 and 12 are rotated at speeds of 100 rpm, 200 rpm and 400 rpm with no wear using a suitable resin raw material (PP).

"Abnormal data" for "wear" represents the time-series data images obtained in the state where the first and second screws 11 and 12 are rotated at 100 rpm, 200 rpm and 400 rpm under the above-mentioned wear abnormality using a suitable resin raw material (PP). For "screw unsuitability," the abnormal data indicates the time-series data images obtained in the state where the first and second screws 11 and 12 are rotated at 100 rpm, 200 rpm and 400 rpm with no wear using the above-mentioned unsuitable resin raw material (PA).

The learning model 35 is then trained with a part of the normal data in the table in FIG. 13 as the training data sets, and evaluates distinguishability between the rest of the normal data and the abnormal data using the Area Under the Curve (ACU). The AUC for the normal data and the abnormal data is 0.96, 1.00, 0.99, 1.00, 0.94, which indicates high distinguishability.

As described above, the abnormality detection apparatus 3, etc. according to the present embodiment can convert time-series data of the displacements of the first and second screws 11, 12 of the twin-screw kneading extruder 1 to a time-series data image representing the time-series data and determine an abnormality of the twin-screw kneading extruder 1 based on the time-series data image.

Moreover, by constructing the learning model 35 with a one-class classification model, the learning model 35 can be machine-trained using the time-series data image obtained when the twin-screw kneading extruder 1 operates in the normal condition without using the time-series data image obtained when the twin-screw kneading extruder 1 is in the abnormal condition.

Additionally, by representing the time-series variations of the displacements in the X-axis direction and the Y-axis direction of the shafts of the first and second screws 11, 12 in a sheet of time-series data image, and by calculating the features of the time-series data image with the learning model 35, the features accurately indicating the condition of the first and second screws 11, 12 of the twin-screw kneading extruder 1 can easily be obtained. By using the features thus obtained, an abnormality of the twin-screw kneading extruder 1 can be detected with accuracy.

In addition, by using the time-series data image including, as it is, the first and second time-series data images respectively representing the displacements of the shafts of the first and second screws 11 and 12, an abnormality of the twin-screw kneading extruder 1 can accurately be detected.

The use of the first and second time-series data images enlarged upward and downward or vertically and horizontally affects the features of the first and second screws 11, 12, resulting in reduced abnormality detection accuracy.

Though the present embodiment described an example where the displacement sensor 2 is provided at the driving shafts 11a, 12a of the first and second screws 11, 12, the displacement sensor 2 may be provided at any position as long as an abnormality of the first and second screws 11 and 12 can be detected. For example, the displacement sensor 2 may be provided at the output shaft of the motor 13. The output shaft is one example of the rotation shaft of the molding machine.

Though the present embodiment described an example where the displacement sensor 2 is provided at both of the first and second screws 11, 12, the displacement sensor 2 may be provided to either one of the first and second screws 11 and 12 for detecting an abnormality.

Though the present embodiment described an example where the displacements of the rotation center axes of the first and second screws 11 and 12 are detected, a physical quantity such as torque applied to the first and second screws 11, 12, rotational speed or rotational acceleration thereof may alternatively be detected so that the time series data of such a physical quantity is used for detecting an abnormality of the twin-screw kneading extruder 1. Note that a time-series data image including multiple images rendering different types of physical quantities may be used for detecting an abnormality in the twin-screw kneading extruder 1. For example, a time-series data image including a first time-series data image rendering the displacements of the rotation center axes of the first and second screws 11, 12 and a time-series data image rendering the torque applied to the first and second screws 11, 12 or rotational acceleration may be used for detecting an abnormality in the twin-screw kneading extruder 1.

Likewise, an arbitrary physical quantity of a movable part may be detected for detecting an abnormality in an industrial machine.

Though the present embodiment described an example where a time-series data image is used including a two-dimensional first time-series data image (first image) indicating the displacement of the first screw 11 by two numerical values and a two-dimensional second time-series data image (second image) indicating the displacement of the second screw 12 by two numerical values, a time-series data image obtained by combining four sheets of images rendering four types of two-dimensional physical quantity data may be used for detecting an abnormality in the twin-screw kneading extruder 1. In addition, time-series data image including five or more images rendering the time-series data may be used for detecting an abnormality in the twin-screw kneading extruder 1.

Though the present embodiment described an example where time-series data image rendering, as it is, a physical quantity that varies in time sequence is used, the detected time-series physical quantity is subjected to frequency conversion, and the time-series data rendering the frequency spectrum of the physical quantity may be used for detecting an abnormality in the twin-screw kneading extruder 1 or the industrial machine.

Though the present embodiment described an example where an abnormality of the first and second screws 11 and 12 of the twin-screw kneading extruder 1 is detected, an abnormality of another movable part or movable parts of a single screw extruder, an injection molding machine and the other industrial machines may be detected using the abnormality detection apparatus 3. In this case, the learning model 35 learns the times-series data image of the movable part in the normal condition.

In the abnormality detection apparatus 3 detecting an abnormality of the movable part of the industrial machine, the processing unit 31 acquires time-series data indicating a two-dimensional first physical quantity consisting of two numerical values and time-series data indicating a two-dimensional second physical quantity consisting of two numerical values, converts the acquired first-time series data into a first image rendering the first physical quantity, converts the acquired second-time series data into a second image rendering the second physical quantity and creates a time-series data image including the converted first image and second image that are combined in a single image. Next, the processing unit 31 inputs the combined time-series data image to the learning model to thereby calculate the feature of the time-series data image and calculate an outlier score for the feature of the time-series data in the normal condition. The processing unit 31 compares the outlier score with a predetermined threshold to detect an abnormality of the industrial machine.

It is noted that a time-series data image including three or more sheets of images rendering three or more types of physical quantities may be used for detecting an abnormality in the industrial machine.

The method of generating a learning model 35 for detecting an abnormality of the movable part of the industrial machine is similar to that of the present embodiment. Using multiple time-series data images generated in the normal operation of the industrial machine and multiple reference images as training datasets, the training model of a one-class classification model may be trained according to the method illustrated in FIG. 10.

Though the present embodiment described an example where the processing unit 31 of the abnormality detection apparatus 3 trains the learning model 35, another external computer or server may be used for machine-training the learning model 35.

Though the one-class classification model is described as an example of the learning model 35, general neural networks such as CNN, U-Net or RNN (Recurrent Neural Network), or Support Vector Machine (SVM), Bayesian network or Regression tree other than the general neural networks may also be used.

Furthermore, multiple learning models 35 as a one-class classification model may be used to discriminate the time-series image data in the typical abnormal condition from the time-series data images in the other abnormal conditions. For example, the abnormality detection apparatus 3 includes a first learning model that is trained with time-series data images obtained in the normal condition as in the above-mentioned embodiment. The abnormality detection apparatus 3 further includes a second learning model 35 that is trained with time-series data images obtained in the normal condition and time-series data images in a first abnormal condition. The abnormality detection apparatus 3 can distinguish among the time-series data image in the normal condition, the time-series data image in the first abnormal condition and the time-series data image in the other abnormal conditions by using the first learning model 35 and the second learning model 35. Likewise, by including three or more learning models 35 in the abnormality detection apparatus 3, the abnormality detection apparatus 3 may be configured to distinguish among the time-series data images in the two or more abnormal conditions. Moreover, the multi-class classification model trained may be used to make classification between the time-series image data obtained in the normal condition and the time-series image data in the abnormal condition.

Though an example of performing machine learning using a neural network such as CNN is mainly described, the configuration of the trained model is not limited to CNN, RNN, etc., and may employ a neural network other than CNN or RNN, such as SVM (Support Vector Machine), Basian network or Recurrent tree.

[Description of Reference Numerals]

| | |
|---|---|
| 1 | twin-screw kneading extruder |
| 2 | displacement sensor |
| 3 | abnormality detection apparatus |
| 3a | display unit |
| 4 | recording medium |
| 10 | cylinder |
| 10a | hopper |
| 11 | first screw |
| 11a | driving shaft |
| 12 | second screw |
| 12a | driving shaft |
| 13 | motor |
| 14 | gear reducer |
| 21 | first displacement sensor |
| 22 | second displacement sensor |
| 23 | third displacement sensor |
| 24 | fourth displacement sensor |
| 31 | processing unit |
| 32 | storage unit |
| 33 | input interface |
| 34 | output interface |
| 35 | learning model |
| 35a | neural network |
| P | computer program |

**Claims**

1. A computer program causing a computer to execute processing of detecting an abnormality of an industrial machine having a movable part, wherein the computer executes the processing of

   acquiring physical quantity data on a time-series basis output from a sensor detecting a physical quantity related to a motion of the movable part; converting the physical quantity data on a time-series basis acquired to a time-series data image representing the physical quantity data; inputting the time-series data image converted to a learning model to calculate a feature of the time-series data image, the learning model being trained with a feature of the time-series data image related to the movable part in a normal condition; and determining a presence or an absence of an abnormality of the industrial machine based on the feature calculated.

2. The computer program according to claim 1, wherein the learning model is a model generated by machine learning.

3. The computer program according to claim 1 or 2, wherein the learning model is a one-class classification model generated by machine learning.

4. The computer program according to any one of claims 1 to 3, wherein

   the physical quantity data includes time-series data indicating a first physical quantity and time-series data indicating a second physical quantity, and the time-series data image includes a first image rendering the first physical quantity and a second image rendering the second physical quantity in a single image.

5. The computer program according to any one of claim 4, wherein the first physical quantity and the second physical quantity are each a two-dimensional physical quantity indicated by two numerical vales.

6. The computer program according to any one of claims 1 to 5, wherein the movable part is a rotational shaft of a molding machine, and the physical quantity data includes time-series data indicating a displacement of the rotational shaft of the molding machine, a torque, a rotational speed or a rotational acceleration.

7. The computer program according to any one of claims 1 to 6, wherein the movable part is a screw of a molding machine, and the physical quantity data includes time-series data indicating a screw displacement of the molding machine, a torque, a rotational speed or a rotational acceleration.

8. The computer program according to any one of claims 1 to 3, wherein

   the movable part is a first screw and a second screw of a twin-screw kneading extruder, the physical quantity data includes time-series data indicating displacements in a first-axis direction and a second-axis direction that intersect a rotation center axis of the first screw and time-series data indicating displacements in a third-axis direction and a fourth axis direction that intersect a rotation center axis of the second screw, and

the time-series data image includes, in a single image, a first image rendering displacements of the first screw regarding the first-axis direction and the second-axis direction that intersect each other as coordinate axes, and a second image rendering displacements of the second screw regarding the third-axis direction and the fourth-axis direction that intersect each other as coordinate axes.

9. The computer program according to claim 8, wherein the time-series data image is a substantially square image, and includes the first image and the second image as well as a blank image that fills a part other than the first image and the second image.

10. An abnormality detection method for detecting a presence or an absence of an abnormality of an industrial machine having a movable part,

the method causing a computer to execute the processing of

acquiring physical quantity data on a time-series basis output from a sensor detecting a physical quantity related to a motion of the movable part;

converting the physical quantity data on a time-series basis acquired to time-series data image representing the physical quantity data;

inputting the time-series data image converted to a learning model to calculate a feature of the time-series data image, the learning model being trained with a feature of the time-series data image related to the movable part in a normal condition; and

determining a presence or an absence of an abnormality of the industrial machine based on the feature calculated.

11. An abnormality detection apparatus detecting an abnormality of an industrial machine having a movable part, comprising:

a sensor that detects a physical quantity related to a motion of the movable part;

an acquisition unit that acquires physical quantity data on a time-series basis output from the sensor;

a conversion unit that converts the physical quantity data on a time-series basis acquired by the acquisition unit to a time-series data image representing the physical quantity data;

a calculation unit that inputs the time-series data image converted to a learning model to calculate a feature of the time-series data image, the learning model being trained with a feature of the time-series data image related to the movable part in a normal condition; and

a determination unit that determines a presence or an absence of an abnormality of the industrial machine based on the feature calculated by the calculation unit.

12. A molding machine system, comprising:

the abnormality detection apparatus according to claim 11; and

a molding machine, wherein

the abnormality detection apparatus is adapted to detect an abnormality of the molding machine.

13. A method of generating a learning model for detecting an abnormality of a twin-screw kneading extruder having a first screw and a second screw, the method causing a computer to execute processing of

based on time-series data indicating displacements in a first-axis direction and a second-axis direction that intersect a rotation center axis of the first screw of the twin-screw kneading extruder and time-series data indicating displacements in a third-axis direction and a fourth axis direction that intersect a rotation center axis of the second screw of the twin-screw kneading extruder, generating a plurality of time-series data images each including, in a single image, a first image rendering displacements in the first-axis direction and the second-axis direction that intersect the rotation center axis of the first screw and a second image rendering displacements in the third-axis direction and the fourth-axis direction that intersect the rotation center axis of the second screw, and

based on training data sets including the plurality of time-series data images generated and a plurality of reference images having any feature, generating a learning model that outputs a feature according to a normal operation and an abnormal operation of the twin-screw kneading extruder in a case where a time-series data image including a first image and a second image rendering displacements of the rotation center axes of the first screw and the second screw is input.

FIG.1

FIG. 2

FIG.3

FIG.4

Abnormality Detection Apparatus 3

First Displacement Sensor 21
Second Displacement Sensor 22
Third Displacement Sensor 23
Fourth Displacement Sensor 24
Display Unit 3a

Input I/F 33
Output I/F 34
Processing Unit 31
Storage Unit 32
Computer Program P
Learning Model 35

4

# F I G . 5

Start

S11
Acquire displacement data

S12
Convert acquired data into
time-series data image

S13
Combine

S14
Calculate feature

S15
Calculate outlier score

S16
Normal? — YES

NO

S17
Alarm

End

# FIG . 6

# F I G . 7

First time-series    Second time-series
data image           data image

Time-series data image

FIG. 8

# F I G . 9

Training data sets (Reference images)

| Reference images R0 | Reference images R1 | Reference images R2 |
|---|---|---|
| Label 0 | Label 1 | Label 2 |

Learning Model   35

Training data sets
(Time-series data images at normal operation)

F I G . 10

# FIG. 11

**F I G . 12**

Training data
[Features A]

Test data (Abnormal)
[Features C]

Test data (Normal)
[Features B]

F I G . 13

| Mock-up abnormality | Normal data | Abnormal data | AUC |
|---|---|---|---|
| Wear | 100rpm | Wear, 100rpm | 0.96 |
| | 200rpm | Wear, 200rpm | 1.00 |
| | 400rpm | Wear, 400rpm | 0.99 |
| Screw unsuitability | 100rpm | Resin PA, 100rpm | 1.00 |
| | 200rpm | Resin PA, 200rpm | 1.00 |
| | 400rpm | Resin PA, 400rpm | 0.94 |

## INTERNATIONAL SEARCH REPORT

| International application No. |
|---|
| **PCT/JP2021/039584** |

| **A.** | **CLASSIFICATION OF SUBJECT MATTER** |
|---|---|

*G05B 23/02*(2006.01)i; *G01M 99/00*(2011.01)i; *B29C 48/40*(2019.01)i
FI:   G01M99/00 Z; G05B23/02 302R; B29C48/40

According to International Patent Classification (IPC) or to both national classification and IPC

| **B.** | **FIELDS SEARCHED** |
|---|---|

Minimum documentation searched (classification system followed by classification symbols)

G05B23/02; G01M99/00; B29C48/40

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2020-144619 A (AICHI STEEL WORKS LTD.) 10 September 2020 (2020-09-10)<br>    paragraphs [0012]-[0031] | 1-5, 10-11 |
| Y | | 6-7, 12 |
| A | | 8-9, 13 |
| X | CN 111323228 A (UNIV. GUANGDONG POLYTECHNIC NORMAL) 23 June 2020<br>(2020-06-23)<br>    paragraphs [0035]-[0075] | 1-2, 10 |
| Y | | 6-7, 12 |
| Y | WO 2020/162425 A1 (NEC CORP.) 13 August 2020 (2020-08-13)<br>    paragraphs [0031]-[0040] | 6-7, 12 |
| Y | JP 2018-092453 A (NEC COMMUN. SYST. LTD., et al.) 14 June 2018 (2018-06-14)<br>    paragraphs [0027]-[0060] | 6-7, 12 |
| Y | JP 2020-128013 A (FANUC LTD.) 27 August 2020 (2020-08-27)<br>    paragraphs [0019]-[0035] | 6-7, 12 |
| A | | 8-9, 13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2021/039584** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2020-066178 A (FANUC LTD.) 30 April 2020 (2020-04-30)<br>        paragraphs [0025]-[0042] | 6-7, 12 |
| A | | 8-9, 13 |
| Y | JP 2002-113769 A (HITACHI ZOSEN CORP.) 16 April 2002 (2002-04-16)<br>        paragraphs [0021]-[0022] | 6-7, 12 |
| A | JP 2018-051783 A (FUJI XEROX CO., LTD.) 05 April 2018 (2018-04-05)<br>        paragraphs [0047]-[0050] | 6-9, 12-13 |

Form PCT/ISA/210 (second sheet) (January 2015)

# EP 4 283 425 A1

**INTERNATIONAL SEARCH REPORT**
**Information on patent family members**

International application No.

**PCT/JP2021/039584**

| Patent document cited in search report | | | Publication date (day/month/year) | Patent family member(s) | Publication date (day/month/year) |
|---|---|---|---|---|---|
| JP | 2020-144619 | A | 10 September 2020 | (Family: none) | |
| CN | 111323228 | A | 23 June 2020 | (Family: none) | |
| WO | 2020/162425 | A1 | 13 August 2020 | (Family: none) | |
| JP | 2018-092453 | A | 14 June 2018 | (Family: none) | |
| JP | 2020-128013 | A | 27 August 2020 | US 2020/0254671 A1 paragraphs [0036]-[0057] DE 102020102368 A1 CN 111531831 A | |
| JP | 2020-066178 | A | 30 April 2020 | US 2020/0130246 A1 paragraphs [0035]-[0053] DE 102019128177 A1 CN 111098464 A | |
| JP | 2002-113769 | A | 16 April 2002 | (Family: none) | |
| JP | 2018-051783 | A | 05 April 2018 | (Family: none) | |

Form PCT/ISA/210 (patent family annex) (January 2015)

**EP 4 283 425 A1**

**Patent documents cited in the description**

- JP H550480 A